# EUROPÄISCHE PATENTSCHRIFT

(11) **EP 0 545 012 B1**
(45) Veröffentlichungstag und Bekanntmachung des Hinweises auf die Patenterteilung: **17.01.1996**
(21) Anmeldenummer: 92116265.7
(22) Anmeldetag: 23.09.1992
(51) Int. Cl.: H05B 6/68, F01P 7/04

(54) **Schaltungsanordnung zur Kühllüftersteuerung für ein Haushaltgerät**
Control circuit for a household appliance coding fan
Circuit de contrôle pour ventilateur d'un appareil ménager

(30) Priorität: 03.12.1991 DE 9115013 U
(43) Veröffentlichungstag der Anmeldung: 09.06.1993
(73) Patentinhaber: BOSCH-SIEMENS HAUSGERÄTE GmbH, D-81669 München (DE)
(72) Erfinder: Wurm, Josef, W-8261 Feichten (DE)

(56) Entgegenhaltungen:
- EP-A- 0 023 827
- EP-A- 0 213 443
- DE-A- 1 804 990
- DE-A- 3 804 678

## Beschreibung

Die Erfindung bezieht sich auf eine Schaltungsanordnung zur Kühlluftsteuerung für ein Haushaltgerät, insbesondere für ein Mikrowellen-Kombinationsgerät, das zum Braten, Garen und Kochen geeignet ist.

Nächstliegender Stand der Technik ist die DE-A-38 04 678, die einen Mikrowellen ofen offenbart, bei dem ein Lüfter-Vorschaltwiderstand in Abhängigkeit eines Fenchtesensors und eines Temperatursensors überbrückt wird.

Bei einem anderen Haushaltgerät wird die vom Kühlluftgebläse ausgehende Kühlluftströmung für die Kühlung von temperaturempfindlichen Bauelementen, z.B. elektronischen Uhren, Magnetron, Schaltelektronik benutzt. Durch die bei einem Mikrowellen-Haushaltgerät der genannten Art auftretenden Möglichkeiten der verschiedenen Betriebsarten, beispielsweise reine thermische Betriebsart oder reine Mikrowellen-Betreibsart, ist es notwendig, eine spezielle elektrische Schaltung für die Steuerung des Kühllüfters zu entwickeln.

Der Erfindung liegt daher die Aufgabe zugrunde, ein (insbesondere Mikrowellen-) Haushaltgerät gemäß dem Oberbegriff des Patentanspruches 1 so auszugestalten, daß der Kühllüfter gemäß den möglichen Betriebsarten des(Mikrowellen-)Haushaltgerätes steuerbar ist und gleichzeitig als Wrasenlüfter eingesetzt werden kann.

Die Lösung der Aufgabe ist dadurch gekennzeichnet, daß ein einpolig mit dem Nulleiter verbundener Lüftermotor andererseits mit einem durch einen Schalter überbrückbaren Widerstand beschaltet ist, wobei der Widerstand in Abhängigkeit von der Stellung eines Betriebsarten-Umschalters direkt mit der Wechselspannungsquelle oder andernfalls in Reihenschaltung mit einem Temperaturfühler verbunden ist.

Durch die erfindungsgemäße Schaltungsanordnung ist es möglich, konventionelle Heizungsarten mit niedriger Drehzahl nach etwa 3 Minuten mit dem Kühllüfter zu beaufschlagen. Für Mikrowellen-Solobetrieb ist eine sofortige, mit niedriger Drehzahl beaufschlagte Kühlung erforderlich, für Zeiten größer als 3 Minuten wird eine höhere Drehzahl für den Kühllüfter-Motor bereitgestellt. Dies ist insofern erforderlich, da speziell für den Mikrowellen-Solobetrieb der Wrasenniederschlag nach etwa 3 Minuten Betriebszeit am größten ist. Da es üblich ist, daß für Mikrowellen-Solobetrieb Kurzzeitbetriebe unter 3 Minuten angewählt werden, ist zur Geräuschreduzierung des Kühlluftgebläses die höhere Drehzahl erst nach 3 Minuten zugeschaltet. Für Kombinationsbetrieb des Mikrowellen-Haushaltgerätes, d.h. konventionelle thermische Heizungen in Verbindung mit Mikrowelle, wird der Kühllüfter sofort eingeschaltet bei niedriger Drehzahl.

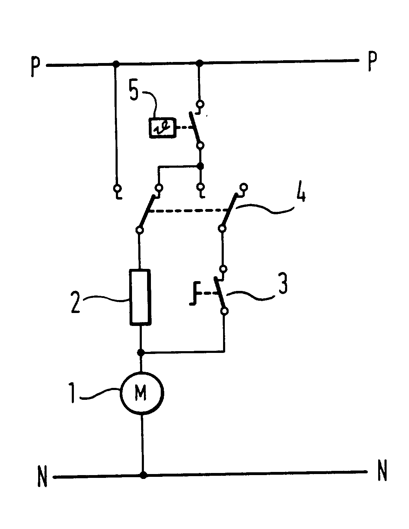

Ein Ausführungsbeispiel nach der Erfindung ist im folgenden anhand der Zeichnung näher beschrieben.

Die Figur zeigt die erfindungsgemäße Schaltungsanordnung. Es sind die schaltungstechnischen Verbindungen eines Lüftermotors 1, eines Ohm'schen Widerstandes 2, eines Vorwählschalters 3, eines Betriebsarten-Umschalters 4 und eines Temperaturfühlers 5 der Figur entnehmbar.

Der Temperaturfühler 5, der separat elektrisch beheizt wird, schließt infolge dieser Heizung nach etwa 3 Minuten den Kontakt. Dann wird gemäß der Abbildung der Lüftermotor 1 über den Vorwiderstand 2 mit der Spannungsquelle verbunden und mit einer niedrigeren Drehzahl betrieben. Dies entspricht der Betriebsart konventioneller Backofenbetrieb, also thermische Heizelemente, wobei der Anlauf des Kühllüftermotors nur von der Zeitkonstante des Temperatur fühlers 5 abhängig ist. Mit Hilfe eines separaten Heizwiderstandes wird dem Temperaturfühler 5 eine Umgebungstemperatur vorgetäuscht, wie sie erst sehr viel später gegeben wäre, wenn der Einschaltzeitpunkt ausschließlich von der Erhitzung der Garraummuffel oder gar des Schalterraumes abhängig wäre. Die Praxis hat gezeigt, daß eine derartige Bemessung dieses Heizwiderstandes vorteilhaft ist, wenn der Temperaturfühler nach etwa 3 Minuten nach Backofen-Betriebsanwahl das Kühlluftgebläse in Betrieb setzt. Für Kurzzeitbetrieb der Backofen-Heizung ist das Kühlluftgebläse nur durch die thermische Zeitkonstante des Heizwiderstandes betriebsbereit. Ist jedoch durch eine längere Betriebszeit oder durch eine hohe Backofentemperatur die Umgebungstemperatur über den Ausschaltwert des Temperaturfühlers angestiegen, so läuft das Kühlluftgebläse bis zur Abkühlung auf den Ausschaltwert weiter.

Wird über den Betriebsartenschalter 4 Mikrowellen-Solobetrieb angewählt, dann schaltet der Betriebsarten-Umschalter 4 auf die nicht dargestellte Schaltstellung gemäß der Figur um, und schließt damit den Strompfad von P über den Widerstand 2 und den Lüftermotor 1 nach N. Für Mikrowellenbetrieb ist der Vorwählschalter 3 in der gemäß Figur gezeichneten Stellung. Da aber mit dem Einschalten des Betriebsarten-Umschalters Mikrowellen-Solobetrieb der Temperaturfühler 5 noch nicht geschaltet haben kann, wenn die Umgebungstemperatur dies ausschließt, läuft im allgemeinen zunächst der Lüftermotor mit seiner niedrigeren Drehzahl. Hat der Temperaturfühler angesprochen, und damit den Kontakt geschlossen, dann wird der Vorwiderstand kurzgeschlossen und der Lüftermotor kann mit seiner höheren Drehzahl laufen. Für Kombinationsbetrieb, also eine thermische Heizart, verbunden mit Mikrowelle, wird der Vorwählschalter 3 geöffnet. Der Betriebsarten-Umschalter 4 steht infolge der Anwahl einer Mikrowellen-Betriebsart in der nicht dargestellten Stellung und gibt damit den Strompfad P - Widerstand 2 - Lüftermotor 1 - N frei. Damit ist für Kombinationsbetrieb eine sofortige, mit niedriger Drehzahl erfolgende Kühlbelüftung erreicht.

## Patentansprüche

1. Schaltungsanordnung zur Kühlluftsteuerung bei einem Haushaltgerät, insbesondere für ein Mikrowellen-Kombinationsgerät, **dadurch gekennzeichnet**, daß ein einpolig mit dem Nulleiter verbundener Lüftermotor (1) andererseits mit einem durch einen Schalter (3) überbrückbaren Widerstand (2) beschaltet ist, wobei der Widerstand (2) in Abhängigkeit von der Stellung eines Betriebsarten-Umschalters (4) direkt mit der Wechselspannungsquelle oder andernfalls in Reihenschaltung mit einem Temperaturfühler (5) verbunden ist.

2. Schaltungsanordnung nach Anspruch 1, dadurch gekennzeichnet, daß der Schalter (3) ein Vorwählschalter ist.

3. Schaltungsanordnung nach Anspruch 1, dadurch gekennzeichnet, daß der Widerstand (2) zur Drehzahlregelung dient.

4. Schaltungsanordnung nach Anspruch 1, dadurch gekennzeichnet, daß der Betriebsarten-Umschalter (4) im Mikrowellenbetrieb den Widerstand (2) kurzschließt.

5. Schaltungsanordnung nach Anspruch 1, dadurch gekennzeichnet, daß der Temperaturfühler (5) für konventionelle Backofen-Betriebsarten eine Kühllüfter-Nachlaufzeit im Ausschaltzustand realisiert.

## Claims

1. Circuit arrangement for the cooling air control in a domestic appliance, in particular for a microwave combination appliance, characterised thereby, that a fan motor (1), which is connected at one pole with the neutral conductor, is connected at the other end to a resistor (2), which is bridgeable by a switch (3), wherein the resistor (2) is connected directly with the alternating current source or otherwise in series connection with a temperature sensor (5) in dependence on the setting of an operating mode change-over switch (4).

2. Circuit arrangement according to claim 1, characterised thereby, that the switch (3) is a preselector switch.

3. Circuit arrangement according to claim 1, characterised thereby, that the resistor (2) serves for the regulation of rotational speed.

4. Circuit arrangement according to claim 1, characterised thereby, that the operating mode change-over switch (4) short-circuits the resistor (2) in microwave operation.

5. Circuit arrangement according to claim 1, characterised thereby, that the temperature sensor (5) in the switched off state realises a cooling fan running-on time for conventional baking oven modes of operation.

## Revendications

1. Circuit de commande d'air de refroidissement d'un appareil ménager, en particulier pour un appareil combiné à micro-ondes, caractérisé en ce qu'un moteur de ventilateur (1) connecté par l'un de ses pôles au conducteur neutre est relié d'autre part à une résistance (2) pouvant être court-circuitée par un commutateur (3), la résistance (2) étant, en fonction de la position d'un commutateur de mode de fonctionnement (4), connectée directement à la source de tension alternative ou, dans le cas contraire, en série à une sonde pyrométrique (5).

2. Circuit selon la revendication 1, caractérisé en ce que le commutateur (3) est un présélecteur.

3. Circuit selon la revendication 1, caractérisé en ce que la résistance (2) sert à réguler la vitesse de rotation.

4. Circuit selon la revendication 1, caractérisé en ce que, en mode micro-ondes, le commutateur de mode de fonctionnement (4) court-circuite la résistance (2).

5. Circuit selon la revendication 1, caractérisé en ce que, en position hors circuit, la sonde pyrométrique (5) maintient le ventilateur de refroidissement en marche pour les modes de fonctionnement classiques du four.
